(19) **Europäisches Patentamt**
**European Patent Office**
**Office européen des brevets**

(11) **EP 3 643 043 B1**

(12) **FASCICULE DE BREVET EUROPÉEN**

(45) Date de publication et mention
de la délivrance du brevet:
**17.11.2021 Bulletin 2021/46**

(21) Numéro de dépôt: **18736999.6**

(22) Date de dépôt: **11.06.2018**

(51) Int Cl.:
*G06F 16/2452* (2019.01)     *H04L 12/58* (2006.01)
*H04L 29/08* (2006.01)

(86) Numéro de dépôt international:
**PCT/FR2018/051356**

(87) Numéro de publication internationale:
**WO 2018/234654 (27.12.2018 Gazette 2018/52)**

(54) **DISPOSITIFS ET PROCÉDÉS DE COMMUNICATION**

KOMMUNIKATIONSVORRICHTUNGEN UND -VERFAHREN

COMMUNICATION DEVICES AND METHODS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.06.2017  FR 1755625**

(43) Date de publication de la demande:
**29.04.2020  Bulletin 2020/18**

(73) Titulaire: **ORANGE**
**92130 Issy-les-Moulineaux (FR)**

(72) Inventeurs:
• **ZIMMERMANN, Julien**
**92326 Ch tillon cedex (FR)**
• **BERTIN, Emmanuel**
**92326 Ch tillon cedex (FR)**

(56) Documents cités:
WO-A1-2017/021579     FR-A1- 3 050 843
US-A1- 2009 024 705     US-A1- 2016 255 186

## Description

Arrière-plan de l'invention

L'invention se rapporte au domaine général des systèmes de communication.

Elle concerne plus particulièrement les communications entre objets connectés ou objets communicants, tels que ceux considérés notamment dans le cadre de l'Internet des Objets (ou IoT pour Internet of Things).

De tels objets sont des dispositifs matériels et/ou logiciels, connectés à un réseau de communications tel que par exemple au réseau public Internet ou à un réseau sans fil, et qui peuvent par ce biais communiquer avec d'autres systèmes ou d'autres objets connectés pour obtenir et/ou fournir des informations ou des données. Aucune limitation n'est attachée ici à la nature de ces objets communicants : il peut s'agir de téléphones, de périphériques tels qu'une imprimante ou un écran, de capteurs divers (ex. température, pression, signaux acoustiques, etc.), d'une application purement logicielle (autrement dit d'un programme informatique), etc., ni à la façon dont ces objets communicants sont connectés à leur réseau (ex. liaison filaire, radio, etc.).

Actuellement, lorsqu'un objet connecté O1 (ou plus généralement un programme informatique implémenté par cet objet) souhaite communiquer avec un autre objet connecté 02 (ou plus généralement avec un programme informatique implémenté par cet objet 02) par exemple pour lui demander d'exécuter une requête, l'objet connecté O1 doit utiliser les méthodes informatiques (fonctions, procédures, protocoles, etc.) supportées par l'objet connecté 02. On désigne ici par langage informatique supporté par l'objet, l'ensemble de ces méthodes informatiques, référencé dans la suite par M2 pour l'objet 02.

Le langage informatique M2 comprend généralement une ou plusieurs commandes déterminées, chaque commande pouvant être associée à un ou plusieurs paramètres permettant de préciser la commande. Par exemple, lorsque l'objet 02 est un capteur de température, une telle commande visant à déclencher l'acquisition de la température par l'objet 02 peut être « get_temperature(unit) », où « unit » est un paramètre de la commande « get_temperature » permettant de préciser la commande, et pouvant prendre ici deux valeurs distinctes à savoir « CELSIUS » ou « FARENHEIT ».

Pour interagir avec l'objet connecté 02, l'objet connecté O1 peut être programmé à l'avance par son concepteur avec les méthodes informatiques définies par le langage informatique M2, et être configuré pour utiliser ces méthodes informatiques lors de son interaction avec l'objet 02. Selon une autre alternative, l'objet connecté O1 peut être en mesure de découvrir auprès d'un serveur de capacités ou directement auprès de l'objet connecté 02, les capacités de l'objet connecté 02 et en particulier le langage informatique M2 utilisé par celui-ci, et d'être programmé à la volée pour être en mesure d'utiliser ce langage informatique M2 pour communiquer avec l'objet connecté O1.

Selon l'une ou l'autre de ces alternatives, l'objet connecté O1 doit avoir une connaissance *a priori* du langage informatique M2 ou pouvoir être mis à jour pour supporter (i.e. être compatible avec) ce langage informatique M2. Ceci peut s'avérer contraignant ou nécessiter des développements importants, voire poser des problèmes de faisabilité. Certains langages informatiques ne peuvent en effet être codés que statiquement dans les objets qui les utilisent.

Le document US 2016/0255186 A1 décrit un dispositif de communication recevant d'un utilisateur des requêtes formulées dans un langage naturel.

Objet et résumé de l'invention

L'invention permet de remédier notamment aux problèmes précités en proposant un dispositif de communication associé à une entité dite émettrice comprenant un premier module d'émission/réception apte à recevoir, en provenance de l'entité émettrice, une requête formulée dans un langage naturel prédéterminé. L'entité émettrice comprend en outre :

- un module d'extraction configuré pour extraire à partir de la requête formulée dans le langage naturel prédéterminé au moins un mot clé représentatif de la requête ;

- un module d'identification configuré pour identifier en utilisant ledit au moins un mot clé extrait, un dispositif cible supportant le langage naturel prédéterminé vers lequel transmettre la requête ; et

- un deuxième module d'émission/réception configuré pour transmettre la requête formulée dans le langage naturel au dispositif cible.

Dans un mode de réalisation, l'invention propose d'associer à chacun des objets connectés communiquant selon un langage informatique qui lui est propre, un dispositif de communication configuré pour traduire en langage naturel les méthodes de ce langage informatique et plus particulièrement les requêtes et les réponses susceptibles d'être émises par l'objet connecté suivant sa fonction selon ce langage informatique. Par langage naturel (aussi désigné par langage ordinaire), on entend une langue « normale », parlée par un être humain telle que par exemple le français ou l'anglais, par opposition à un langage formel tel qu'un langage informatique ou un langage machine (ex. binaire).

Plus précisément, le dispositif de communication associé à une entité dite émettrice comprend :

- un premier module d'émission/réception apte à recevoir, en provenance de l'entité émettrice, une requête formulée dans un langage informatique prédéterminé ou dans un langage naturel prédéterminé ;

- un module de traduction, activé si la requête est formulée dans le langage informatique prédéterminé, et configuré pour traduire la requête dans le langage naturel prédéterminé ;
- un module d'extraction configuré pour extraire à partir de la requête formulée dans le langage naturel prédéterminé au moins un mot clé représentatif de la requête ;
- un module d'identification configuré pour identifier en utilisant ledit au moins un mot clé extrait, un dispositif cible supportant le langage naturel prédéterminé vers lequel transmettre la requête ; et
- un deuxième module d'émission/réception configuré pour transmettre la requête formulée dans le langage naturel au dispositif cible.

Corrélativement, l'invention concerne également un procédé de communication destiné à être mis en oeuvre par un dispositif de communication associé à une entité dite émettrice, ce procédé comprenant :

- une étape de réception d'une requête émise par l'entité émettrice ;
- une étape d'extraction à partir de la requête d'au moins un mot clé représentatif de la requête ;
- une étape d'identification, en utilisant ledit au moins un mot clé extrait, d'un dispositif dit cible supportant un langage naturel prédéterminé vers lequel transmettre la requête ; et
- une étape de transmission de la requête au dispositif cible identifié.

Selon un mode de réalisation, le procédé de communication comprend :

- une étape de réception d'une requête émise par l'entité émettrice et formulée dans un langage informatique prédéterminé ou dans un langage naturel prédéterminé ;
- si la requête est formulée dans le langage informatique prédéterminé, une étape de traduction de la requête dans le langage naturel prédéterminé ;
- une étape d'extraction à partir de la requête formulée dans le langage naturel prédéterminé d'au moins un mot clé représentatif de la requête ;
- une étape d'identification, en utilisant ledit au moins un mot clé extrait, d'un dispositif dit cible supportant le langage naturel prédéterminé vers lequel transmettre la requête formulée dans le langage naturel ; et
- une étape de transmission de la requête formulée dans le langage naturel au dispositif cible identifié.

L'invention propose également un dispositif de communication associé à un objet communicant comprenant :

- un premier module d'émission/réception apte à recevoir d'un dispositif dit d'origine une requête que l'objet communicant est capable de traiter, ladite requête étant formulée dans un langage naturel prédéterminé ;
- un module de traduction configuré pour traduire la requête reçue dans un langage informatique prédéterminé utilisé pour communiquer par l'objet communicant ; et
- un deuxième module d'émission/réception, configuré pour transmettre la requête formulée dans le langage informatique prédéterminé à l'objet communicant.

Corrélativement, l'invention vise un procédé de communication destiné à être mis en oeuvre par un dispositif de communication associé à un objet communicant, le procédé comprenant :

- une étape de réception en provenance d'un dispositif dit d'origine d'une requête que l'objet communicant est capable de traiter, ladite requête reçue étant formulée dans un langage naturel prédéterminé ;
- une étape de traduction de requête formulée dans le langage naturel prédéterminé dans un langage informatique prédéterminé utilisé par l'objet communicant pour communiquer ; et
- une étape de transmission de la requête formulée dans le langage informatique prédéterminé à l'objet communicant.

Les dispositifs de communication associés à aux entités émettrice ou réceptrice peuvent être intégrés directement dans ces entités, ou en variante, se trouver sur des serveurs applicatifs avec lesquels les entités peuvent communiquer.

L'entité dite émettrice fait référence ici à l'entité qui émet une requête et l'entité réceptrice à une entité qui est capable de traiter cette requête, c'est-à-dire de l'exécuter et/ou d'y répondre suivant la nature de la requête.

Ainsi, dans un mode particulier de réalisation, le dispositif de communication associé à l'entité émettrice est tel que :

- le premier module d'émission/réception est activé sur réception d'une réponse formulée dans le langage naturel à la requête, pour transmettre cette réponse à l'entité émettrice ; et
- le module de traduction est en outre configuré pour traduire la réponse préalablement à sa transmission à l'entité émettrice dans le langage informatique prédéterminé si l'entité émettrice communique en utilisant le langage informatique prédéterminé.

Corrélativement, le procédé de communication mis en oeuvre par le dispositif de communication associé à l'entité émettrice peut comprendre en outre :

- une étape de réception d'une réponse à la requête, ladite réponse étant formulée dans le langage naturel ; et
- une étape de transmission de la réponse à l'entité émettrice, ladite réponse étant préalablement traduite dans le langage informatique prédéterminé si l'entité émettrice communique en utilisant le langage informatique prédéterminé.

De façon similaire, dans un mode particulier de réalisation, le dispositif de communication associé à l'entité réceptrice est tel que :

- le module de traduction est en outre configuré pour traduire dans le langage naturel prédéterminé une réponse à la requête reçue de l'objet communicant et formulée dans le langage informatique prédéterminé ; et
- le premier module d'émission/réception est en outre configuré pour transmettre la réponse formulée dans le langage naturel prédéterminé au dispositif d'origine.

Corrélativement, le procédé de communication mis en œuvre par l'entité réceptrice peut comprendre en outre :

- une étape de réception en provenance de l'objet communicant d'une réponse à la requête, ladite réponse étant formulée dans le langage informatique prédéterminé ;
- une étape de traduction de la réponse formulée dans le langage informatique prédéterminé dans le langage naturel prédéterminé ; et
- une étape de transmission au dispositif d'origine de la réponse formulée dans le langage naturel prédéterminé.

Il convient de noter que l'invention s'applique à des entités émettrice (d'une requête à exécuter) et réceptrice (apte à traiter la requête et à l'exécuter) de type objets connectés ou communicants, mais l'une ou l'autre de ces entités peut également être un être humain communiquant en utilisant un langage naturel, auquel cas ce langage naturel peut être utilisé directement par le dispositif de communication associé à l'entité en question sans nécessiter de traduction préalable.

Grâce à l'invention, les entités émettrice et réceptrice n'ont pas besoin d'avoir une connaissance préalable de leurs capacités respectives pour communiquer. Il n'est pas nécessaire de s'assurer qu'elles soient compatibles entre elles préalablement à ou lors de cette communication au niveau notamment du langage informatique qu'elles utilisent, dès lors que les dispositifs de communication auxquels elles sont associées partagent un même langage naturel, par exemple l'anglais ou qu'un dispositif intermédiaire assure la traduction entre les langages naturels utilisés par les dispositifs de communication respectifs des entités émettrice et réceptrice. Le dispositif de communication associé à l'entité émettrice peut ainsi directement invoquer en langage naturel la fonction qui intéresse l'entité émettrice chez l'entité réceptrice pour traiter sa requête, et ce via une interaction mise en place en langage naturel (directement ou indirectement via un dispositif intermédiaire) entre le dispositif de communication associé à l'entité émettrice et le dispositif de communication associé à l'entité réceptrice.

Ceci simplifie grandement les communications entre les entités émettrices et réceptrices, et permet d'utiliser différents types de canaux de communication entre ces entités comme par exemple un canal de communication de type messagerie instantanée ou chat.

Ainsi, dans un mode particulier de réalisation, le deuxième module d'émission/réception du dispositif de communication associé à l'entité émettrice est configuré pour établir avec le dispositif cible un canal de communication de type messagerie instantanée pour communiquer avec ce dispositif cible en utilisant le langage naturel prédéterminé.

En outre, l'invention est remarquable en ce que, une fois la requête formulée en langage naturel disponible, le dispositif de communication associé à l'entité émettrice est avantageusement configuré pour extraire à partir de cette requête formulée en langage naturel, un ou plusieurs mots clés représentatifs de la requête, par exemple du traitement requis ou du type de réponse attendue à la requête. Puis à partir des mots clés extraits en langage naturel, le dispositif de communication est configuré pour identifier un dispositif cible vers lequel transférer la requête de l'entité émettrice en vue de son traitement. Ce dispositif cible, qu'il s'agisse d'un dispositif de communication associé à une entité réceptrice capable de traiter la requête ou d'un dispositif intermédiaire, connait le langage naturel utilisé par le dispositif de communication associé à l'entité émettrice et est en mesure d'exploiter la requête formulée en langage naturel (ex. de la traduire dans un autre langage naturel ou de la traiter directement).

Ainsi, selon l'invention, il n'est pas nécessaire que préalablement à l'émission d'une requête, l'entité émettrice ait identifié clairement l'entité réceptrice qui est en mesure de traiter sa requête, pour s'assurer typiquement qu'elle supporte ou est compatible avec son langage informatique. Cette identification est réalisée à la volée, à partir de mots clés extraits de la requête pour tenir compte du fait que celle-ci est formulée dans un langage naturel.

Dans un mode particulier de réalisation, le module d'identification est configuré pour interroger, en utilisant ledit au moins un mot clé extrait, une base de données comprenant au moins un mot clé appartenant au langage naturel prédéterminé, relié à au moins un dispositif de communication supportant le langage naturel prédéterminé et associé à un objet communiquant capable de traiter la requête dont ledit au moins un mot clé est représentatif.

Autrement dit, dans ce mode de réalisation, le dispositif de communication associé à l'entité réceptrice dispose d'une connaissance d'un certain nombre d'objets communicants capables de traiter des requêtes et du type de requêtes que ces objets communicants sont capables de traiter (via les mots clés), les objets communicants référencés dans la base de données étant avantageusement associés à des dispositifs de communication qui communiquent selon le même langage naturel que le dispositif de communication associé à l'entité émettrice.

A partir de cette base de données, le module d'identification peut être configuré typiquement pour identifier comme dispositif cible :

- un dispositif de communication associé à un objet communicant capable de traiter la requête et relié dans la base de données audit au moins un mot clé extrait ; ou
- un dispositif prédéfini si la base de données ne contient pas ledit au moins un mot clé extrait.

Ce dispositif prédéfini est par exemple un dispositif apte à identifier un objet communicant capable de traiter la requête dont ledit au moins un mot clé extrait est représentatif.

Autrement dit, le dispositif de communication associé à l'entité émettrice, lorsqu'il n'a pas de connaissance *a priori* d'un objet communicant capable de traiter la requête sur la base des mots clés qualifiant la requête dont il dispose, a toujours la possibilité dans ce mode de réalisation de s'adresser à un dispositif tiers ayant une connaissance plus complète des objets communicants susceptibles de traiter la requête de l'entité émettrice.

On note que cette connaissance plus complète peut être liée notamment au fait que parmi les objets communicants connus du dispositif tiers, certains peuvent être associés à des dispositifs de communication communiquant selon un langage naturel différent de celui utilisé par le dispositif de communication associé à l'entité émettrice. Dans un tel cas, le dispositif tiers comprend préférentiellement un module de traduction permettant de traduire le cas échéant le langage naturel utilisé par le dispositif de communication associé à l'entité émettrice vers ce ou ces langages naturels différents pour faire le lien entre les deux dispositifs de communication.

Cette connaissance plus complète peut également provenir du fait que le dispositif tiers bénéficie d'une base de données plus « métier » que le dispositif de communication associée à l'entité émettrice, c'est-à-dire orientée sur le type de fonction ou de traitement attendu pour la requête.

Dans un mode particulier de réalisation, le module d'identification est en outre configuré pour :

- obtenir des capacités d'au moins un objet communicant ; et
- ajouter dans la base de données un dispositif de communication supportant le langage naturel prédéterminé et associé à l'objet communicant en le reliant à au moins un mot clé déterminé à partir des capacités obtenues de l'objet communicant.

Ce mode de réalisation permet au dispositif de communication associé à l'entité émettrice d'enrichir sa base de données avec de nouveaux objets communicants.

La découverte de nouveaux objets communicants et l'obtention des capacités de ces nouveaux objets communicants peuvent être réalisées en interrogeant directement ces nouveaux objets, par exemple via un protocole de découverte d'objets communicants et de leurs capacités, tel que le protocole BlueTooth™, etc.

Elles peuvent également résulter d'informations communiquées par un dispositif tiers tel que celui évoqué précédemment, ou d'un apprentissage mis en œuvre par le dispositif de communication associé à l'entité émettrice à partir des objets communicants qui ont précédemment traité des requêtes de l'entité émettrice.

Dans un mode particulier de réalisation, dans la base de données, au moins un mot clé représentatif d'une requête est en outre relié à un paramètre permettant de préciser ladite requête.

Par exemple, dans le cas d'une requête portant sur l'acquisition d'une température, ce paramètre peut consister à préciser s'il s'agit d'une température en degrés Celsius ou Fahrenheit. Ceci peut permettre de cibler plus facilement et plus rapidement un objet communicant apte à traiter la requête de l'entité émettrice.

Dans un mode particulier de réalisation, le dispositif de communication associé à l'entité émettrice comprend en outre un module de gestion configuré pour maintenir un contexte pour la requête sur une période déterminée, le contexte maintenu par le module de gestion comprenant un identifiant de contexte associé à la requête.

La période déterminée est prise égale par exemple à la période nécessaire au traitement de la requête par l'entité réceptrice (le cas échéant, jusqu'à réception de la réponse à la requête par l'entité émettrice). Ce contexte maintenu pour la requête est géré par le dispositif de communication de façon transparente pour l'entité émettrice et de l'entité réceptrice. Vu de ces entités, la « transaction » mise en œuvre entre ces deux entités est sans état.

De façon avantageuse, le maintien d'un tel contexte offre la possibilité aux dispositifs de communication associés aux deux entités émettrice et réceptrice de dialoguer entre eux sans impliquer directement les entités, c'est-à-dire sans les solliciter.

Ainsi par exemple, le dispositif de communication associé à l'entité émettrice peut être configuré pour fournir, sans solliciter l'entité émettrice, au moins un paramètre au dispositif cible précisant la requête dans un message comprenant l'identifiant de contexte associé à la requête.

Autrement dit, les dispositifs de communication associés aux deux entités peuvent communiquer entre eux dans le contexte de la requête pour préciser certains paramètres ou certains termes de la requête, etc.

Dans un mode particulier de réalisation, les différentes étapes des procédés de communication mis en œuvre par les dispositifs de communication associés aux entités émettrice et réceptrice sont déterminées par des instructions de programmes d'ordinateurs.

En conséquence, l'invention vise aussi un programme d'ordinateur sur un support d'informations, ce programme étant susceptible d'être mis en œuvre dans un dispositif de communication associé à l'entité émettrice ou réceptrice suivant le programme concerné, ou plus généralement dans un ordinateur, ce programme comportant des instructions adaptées à la mise en œuvre des étapes d'un procédé de communication tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un autre aspect, l'invention vise également un système comprenant :

- un premier dispositif de communication selon l'invention associé à une entité émettrice à l'origine d'une requête ;
- un deuxième dispositif de communication associé à une entité réceptrice capable de traiter la requête ;

ledit premier dispositif de communication étant apte à transmettre au deuxième dispositif de communication ladite requête formulée dans un langage naturel prédéterminé supporté par le deuxième dispositif de communication.

Selon un autre aspect encore, l'invention vise un système comprenant :

- un premier dispositif de communication selon l'invention associé à une entité émettrice à l'origine d'une requête ;
- un deuxième dispositif de communication associé à une entité réceptrice capable de traiter ladite requête ; et
- un dispositif intermédiaire entre le premier dispositif de communication et le deuxième dispositif de communication auquel le premier dispositif de communication transmet la requête formulée dans un langage naturel prédéterminé, ledit dispositif intermédiaire étant configuré pour, sur réception de la requête :

  • identifier le deuxième dispositif de communication associé à l'entité réceptrice capable de traiter la requête ; et
  • transmettre la requête au deuxième dispositif de communication.

Dans un mode particulier de réalisation, le premier et le deuxième dispositifs de communication de ce système supportent des langages naturels différents, et le dispositif intermédiaire comprend un module de traduction du langage naturel supporté par le premier dispositif de communication vers le langage naturel supporté par le deuxième dispositif de communication et inversement, configuré pour traduire la requête avant sa transmission au deuxième dispositif de communication.

En outre, dans un mode particulier de réalisation des systèmes précités, l'entité réceptrice est un objet communicant utilisant pour communiquer un langage informatique prédéterminé et le deuxième dispositif de communication est conforme à l'invention.

Par ailleurs, dans ces systèmes, le premier dispositif de communication peut être compris dans l'entité émettrice et/ou ledit deuxième dispositif de communication être compris dans l'entité réceptrice.

Les systèmes précités bénéficient des mêmes avantages mentionnés précédemment que le dispositif de communication associé à l'entité émettrice et que le dispositif de communication associé à l'entité réceptrice.

On peut également envisager, dans d'autres modes de réalisation, que les procédés de communication, les dispositifs de communication associés respectivement à l'entité émettrice et à l'entité réceptrice et les systèmes selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système conforme à l'invention, dans un mode particulier de réalisation ;
- la figure 2 illustre l'architecture matérielle d'un objet connecté appartenant au système de la figure 1 et comprenant un dispositif de communication selon l'invention ;
- la figure 3 donne un exemple d'une base de données pouvant être utilisée conformément à l'invention ;
- les figures 4 et 5 représentent les principales étapes de procédés de communication selon l'invention tels qu'ils sont mis en œuvre par les dispositifs de communication du système de la figure 1 ; et
- la figure 6 illustre les étapes mises en œuvre par un dispositif du système de la figure 1 intervenant entre deux objets connectés de ce système.

Description détaillée de l'invention

Nous allons maintenant décrire un mode particulier de réalisation de l'invention.

Comme mentionné précédemment, l'invention permet à deux entités dites émettrice et réceptrice de communiquer entre elles, sans nécessiter de programmation préalable de l'une et/ou l'autre de ces entités et quand bien même celles-ci n'utiliseraient pas le même langage informatique pour communiquer.

Dans les exemples envisagés pour illustrer l'invention, l'entité émettrice est un objet connecté ou communiquant O1, et plus précisément un objet permettant de réguler la température d'une pièce, tandis que l'entité réceptrice est un objet connecté ou communicant 02 et plus précisément un capteur de température, apte à fournir la température de la pièce en question. Ces exemples ne sont donnés qu'à titre illustratif, et l'invention s'applique dans bien d'autres contextes. Aucune limitation n'est attachée typiquement à la nature des objets connectés considérés ; de même l'entité émettrice ou l'entité réceptrice peut être un être humain cherchant à communiquer avec un objet connecté.

En outre, dans le mode de réalisation décrit ici, les dispositifs de communication associés respectivement conformément à l'invention aux entités émettrice et réceptrice sont intégrés dans ces entités émettrice et réceptrice, c'est-à-dire dans les objets connectés O1 et 02. Dans une variante de réalisation, l'un ou l'autre de ces dispositifs de communication peut être hébergé dans un serveur applicatif accessible par l'entité à laquelle il(s) est (sont) associé(s).

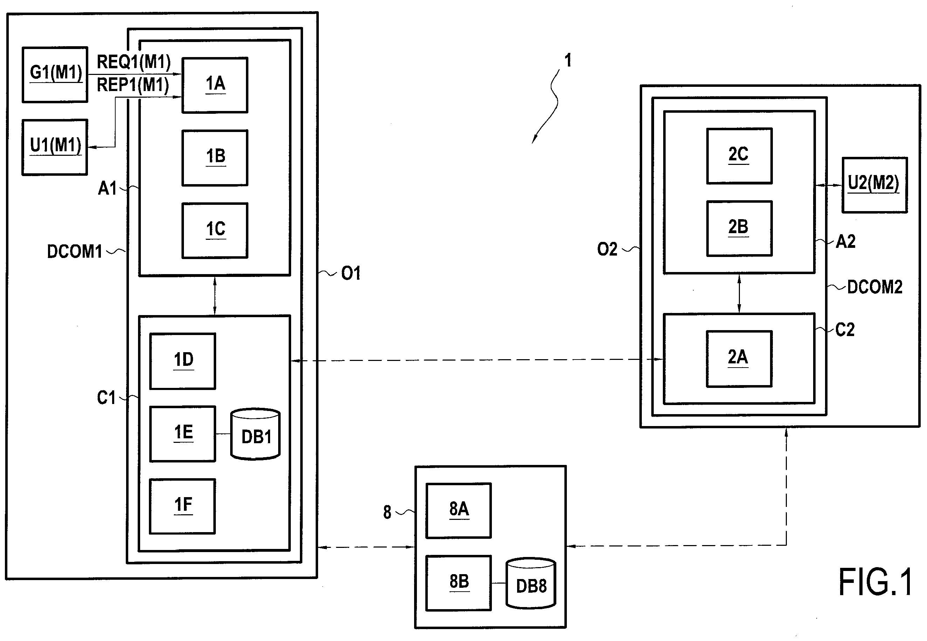

La **figure 1** représente, dans son environnement, un système 1 conforme à l'invention dans un mode particulier de réalisation.

Dans ce mode de réalisation, le système 1 comprend :

- l'objet O1, qui intègre un dispositif de communication DCOM1 conforme à l'invention et associé au sens de l'invention à l'entité émettrice O1 ; et
- l'objet 02, qui intègre un dispositif de communication DCOM2 conforme à l'invention et associé au sens de l'invention à l'entité réceptrice 02.

L'objet O1 comprend par ailleurs ici un module G1 de génération de requêtes, apte à générer des requêtes, formulées ici dans un langage informatique prédéterminé M1, pour obtenir des données et/ou des informations d'autres entités (et en particulier d'autres objets connectés comme l'objet connecté 02) permettant à l'objet O1 de remplir les fonctions qui lui sont attribuées. Dans l'exemple du régulateur de température dans une pièce, le module G1 est apte par exemple à générer une requête notée REQ1 visant à obtenir la température de la pièce en question. Cette requête formulée dans le langage informatique M1 utilisé par l'objet O1 est par exemple :

$$REQ1(M1) = \text{« retrieve\_celsius\_temp »}$$

Par « requête », on entend ici une demande formulée par l'objet O1 au sens général du terme et qui attend un traitement. Il peut s'agir d'une demande d'informations ou de données dont le traitement résulte en la provision d'une réponse, d'un ordre résultant en l'application d'un traitement, etc. Aucune limitation n'est attachée à la nature des requêtes auxquelles s'applique l'invention.

L'objet O1 dispose également ici d'un module U1 d'exploitation des données et/ou informations qu'il a obtenues le cas échéant, notamment par l'intermédiaire des requêtes qu'il a formulées au moyen de son module de génération G1.

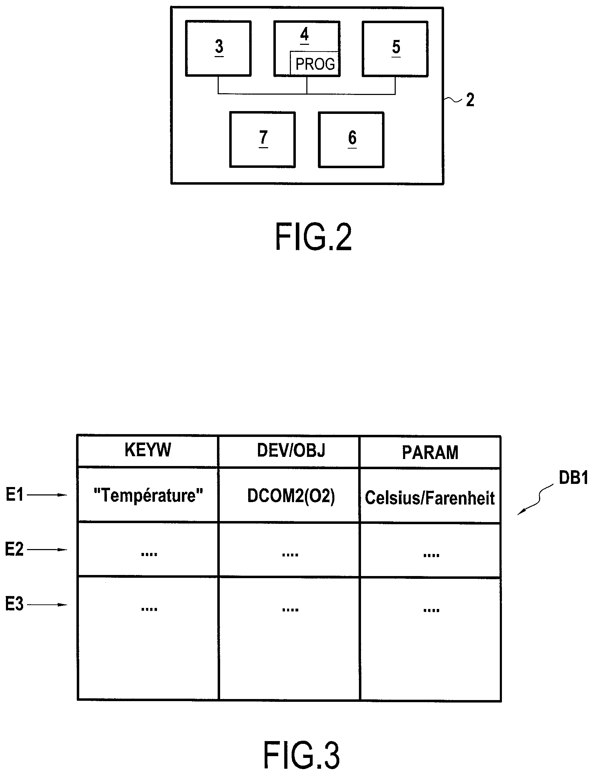

Dans le mode de réalisation décrit ici, l'objet O1 a l'architecture matérielle d'un ordinateur référencé de manière générique par 2 ici, et telle qu'illustrée à la **figure 2.**

L'ordinateur 2 comprend notamment un processeur 3, une mémoire morte 4, une mémoire vive 5, une mémoire non volatile 6 et des moyens de communication 7 sur un ou plusieurs réseaux de communication reliant entre eux les différents objets connectés considérés ici, à savoir les objets connectés O1 et 02. Aucune limitation n'est attachée à la nature de ces réseaux, il peut s'agir par exemple de réseaux sans fil, filaire, mobile ou fixe, etc.

La mémoire morte 4 de l'ordinateur 2 constitue un support d'enregistrement ou d'informations conforme à l'invention, lisible par le processeur 3 et sur lequel est enregistré un programme d'ordinateur conforme à l'invention, référencé de façon générique sur la figure 2 par PROG. Ce programme d'ordinateur PROG diffère en fonction de l'entité dans la mémoire morte de laquelle il est stocké.

Ainsi, lorsque l'ordinateur 2 est l'objet O1, le programme d'ordinateur est un programme PROG1 comportant des instructions pour l'exécution d'un procédé de communication selon l'invention mis en œuvre par le dispositif de communication DCOM1 de l'objet connecté O1. Ce programme PROG1 définit, par le biais de ses instructions, des modules fonctionnels du dispositif de communication DCOM1 et de l'objet O1 qui s'appuient sur et/ou commandent les éléments matériels 3-7 de l'ordinateur 2 décrits précédemment. Ces modules comprennent notamment ici comme illustré à la figure 1 :

- un premier module A1 qui s'occupe à proprement parler de la formulation des requêtes de l'objet O1 destinées aux autres objets connectés (et le cas échéant des réponses reçues à ces requêtes accessibles et interprétables par l'objet O1) ; et
- un deuxième module C1 qui s'occupe d'établir une communication avec un objet connecté susceptible de traiter les requêtes émises par l'objet connecté O1. Dans l'exemple envisagé ici d'un régulateur de température, l'objet connecté en question est typiquement un capteur de température 02 pouvant mesurer la température de la pièce et permettant à l'objet connecté O1 de remplir pleinement sa fonction.

Les modules A1 et C1 sont eux-mêmes constitués de plusieurs modules conformément à l'invention définis par des instructions du programme PROG1. Ainsi, le module A1 comprend, dans le mode de réalisation décrit ici :

- un module d'émission/réception 1A, apte à recevoir en provenance du module de génération G1 de requêtes de l'objet O1, une requête REQ1. Dans l'exemple envisagé ici, la requête REQ1 est formulée dans le langage informatique M1. Le module d'émission/réception 1A, est en outre apte à émettre vers le module U1 des réponses reçues le cas échéant aux requêtes de l'objet O1 (par exemple une réponse REP1 reçue à la requête REQ1) au module U1 d'exploitation de l'objet O1 ; et
- un module de traduction 1B, configuré pour traduire la requête REQ1 formulée en langage informatique M1 dans un langage naturel prédéterminé noté NAT1. Comme mentionné précédemment, par langage naturel (ou langage ordinaire), on entend une langue « normale », parlée par un être humain telle que par exemple le français ou l'anglais, par opposition à un langage formel tel qu'un langage informatique ou un langage machine (ex. binaire). Dans l'exemple envisagé ici, le langage naturel NAT1 est le français. Le module de traduction 1B est également programmé pour traduire le cas échéant une réponse REP1 reçue à la requête REQ1 et formulée dans le langage naturel NAT1 en langage informatique M1.

Dans le mode de réalisation décrit ici, le module A1 comprend également un module de gestion 1C des requêtes, configuré (i.e. adapté, programmé) pour maintenir pour chaque requête formulée par l'objet O1, un contexte noté CNTX sur une période déterminée choisie égale à la durée de traitement de la requête. Cette durée s'étale typiquement de la génération de la requête par le module G1 ou de sa transmission au module A1 jusqu'à la transmission de la réponse à la requête le cas échéant au module U1. Le contexte CNTX comprend un identifiant de contexte ID associé à la requête à laquelle il est rattaché.

Le module C1 qui gère la communication avec les autres objets connectés comprend, dans le mode de réalisation décrit ici :

- un module d'extraction 1D configuré pour extraire à partir de la requête formulée dans le langage naturel NAT1 au moins un mot clé dans le langage naturel NAT1 représentatif de la requête. Par représentatif(s) de la requête, on entend ici que le ou les mots clés extraits qualifie(nt) la requête, ils donnent une indication plus ou moins précise du traitement qui est demandé par celle-ci ou de la réponse qui est attendue pour permettre d'identifier l'objet connecté susceptible de traiter cette requête. Par exemple, pour une requête portant sur la mesure d'une température, un mot clé extrait peut être « température » ;
- un module d'identification 1E, configuré pour identifier en utilisant le ou les mots clés extraits par le module d'extraction 1D, un dispositif cible TARG vers lequel transmettre la requête ; et
- un module d'émission/réception 1F configuré pour transmettre la requête formulée dans le langage naturel NAT1 au dispositif cible identifié par le module d'identification 1E.

Dans le mode de réalisation décrit ici, le module d'identification 1E est programmé, pour identifier le dispositif cible TARG, pour interroger une base de données DB1 à partir du ou des mots-clés extraits par le module d'extraction 1D. La base de données DB1 comprend une ou plusieurs entrées En, n=1,... N, N désignant un entier supérieur ou égal à 1, chaque entrée En comprenant elle-même un ou plusieurs mots-clés notés K(n) appartenant au langage naturel NAT1, relié(s), dans la base de données, à un dispositif de communication référencé par DCOMx (x désignant un entier) supportant le langage naturel NAT1 et associé à un objet communiquant désigné par Ox capable de traiter la requête dont le ou les mots clés de l'entrée En est (sont) représentatif(s).

La **figure 3** illustre un exemple d'entrées d'une telle base de données. On note qu'un même mot clé ou ensemble de mots clés peut être associé à plusieurs dispositifs de communication différents. Dans l'exemple illustratif de la figure 3, la première entrée E1 de la base de données DB1 relie un mot clé « température » (colonne KEYW) au dispositif de communication DCOM2 de l'objet connecté 02 (colonne DEV/OBJ). Le dispositif de communication DCOM2 est identifié dans la base au moyen d'une adresse de joignabilité, permettant de le contacter et d'établir une communication avec lui. Cette adresse est par exemple une adresse IP, une URL (Uniform Resource Locator), ou toute autre adresse permettant de joindre le dispositif de communication DCOM2 et d'établir un canal de communication avec lui selon le réseau considéré pour connecter les objets entre eux.

En outre, dans l'exemple envisagé à la figure 3, une entrée En de la base de données DB1 peut être associée à un ou plusieurs paramètres (colonne PARAM) venant préciser la requête dont le mot clé associé à cette entrée est représentatif. Ce ou ces paramètres dépend(ent) de l'objet connecté Ox qui va traiter la requête. Par exemple, si l'objet 02 est capable de délivrer une mesure de la température en degrés Celsius ou Fahrenheit, il peut être utile de préciser dans quelle unité est souhaitée la mesure. La façon dont ce paramètre est utilisé par le module de communication DCOM1 est décrite plus en détail ultérieurement.

On note que la base de données DB1 peut être préétablie de façon statique, par exemple par un utilisateur de l'objet connecté O1 en fonction des objets connectés qu'il a à sa disposition, et stockée dans le dispositif de communication DCOM1.

En variante, cette base de données peut être établie et enrichie de façon dynamique par le dispositif de communication DCOM1, par exemple par son module d'identification 1E, en obtenant de façon dynamique les capacités d'au moins un objet connecté avec lequel le dispositif de communication DCOM1 peut entrer en communication, et en ajoutant dans la base de données DB1 pour cet objet connecté, un dispositif de communication associé à cet objet supportant le langage naturel NAT1 en relation avec au moins un mot clé déterminé à partir des capacités obtenues de l'objet. La découverte de nouveaux objets connectés et l'obtention des capacités de ces nouveaux objets connectés peuvent être réalisées en interrogeant directement ces nouveaux objets, par exemple via un protocole de découverte d'objets communicants et de leurs capacités, tel que le protocole Blue-Tooth™, etc. Elles peuvent également résulter d'informations communiquées par un dispositif tiers, par l'utilisateur de l'objet 01 ou encore d'un apprentissage mis en œuvre par le dispositif de communication DCOM1 à partir de la connaissance des objets connectés qui ont eu l'occasion de traiter précédemment des requêtes de l'objet O1.

Comme mentionné précédemment, dans le mode de réalisation décrit ici, le module d'identification 1E est programmé pour utiliser la base de données DB1 lorsqu'il identifie le dispositif cible TARG vers lequel transférer la requête traduite en langage naturel NAT1. Plus précisément ici, le module d'identification 1E est configuré pour choisir (i.e. identifier) comme dispositif cible TARG :

- soit un dispositif de communication associé à un objet communicant capable de traiter la requête et relié dans la base de données DB1 au(x) mot(s) clé(s) extrait(s) par le module d'extraction 1D ;
- soit un dispositif prédéfini si la base de données DB1 ne contient pas le ou les mots clés extraits par le module d'extraction 1D.

Le dispositif prédéfini est un dispositif tiers 8 (cf. figure 1), capable d'identifier via un module 8A programmé à cet effet, un objet communicant capable de traiter la requête, lorsque le dispositif de communication DCOM1 et plus particulièrement son module d'identification 1E n'est pas en mesure de le faire à partir des informations stockées dans la base de données DB1. Il peut s'agir par exemple d'un dispositif comprenant une base de données DB8 plus complète que la base de données DB1.

La base de données DB8 est par exemple une base dont les entrées ont la même forme que celles de la base de données DB1, mais spécialisée par domaine métier. Ainsi, dans l'exemple qui est envisagé ici, la base de données DB8 peut être une base dédiée aux objets connectés de la maison. Cette base de données DB8 peut donc avantageusement dépendre du contexte d'application de l'invention.

La base de données DB8 peut en outre inclure des dispositifs de communication communiquant dans des langages naturels différents du langage NAT1 utilisé par le module de communication DCOM1. Dans ce cas, chaque entrée de la base peut en outre être associée à un langage naturel utilisé par le dispositif de communication identifié par cette entrée. Pour gérer ces différentes langues, le dispositif tiers 8 comprend un module de traduction 8B apte à opérer dans différents langages naturels (ex. français, anglais, allemand, chinois, etc.), comme détaillé davantage ultérieurement.

Dans l'exemple envisagé ici, on suppose que l'objet connecté 02 intégrant le module de communication DCOM2 est capable de répondre à la requête REQ1 de l'objet connecté O1. L'objet connecté 02 a également ici l'architecture matérielle d'un ordinateur tel que l'ordinateur 2 représenté à la figure 2 et décrit précédemment. Le programme d'ordinateur PROG stocké dans la mémoire morte 4 de l'objet connecté O2 est alors un programme PROG2 comportant des instructions pour l'exécution d'un procédé de communication selon l'invention mis en œuvre par le dispositif de communication DCOM2 de l'objet connecté 02. Ce programme PROG2 définit, par le biais de ses instructions, des modules fonctionnels du dispositif de communication DCOM2 et de l'objet 02 qui s'appuient sur et/ou commandent les éléments matériels 3-7 de l'ordinateur 2 décrits précédemment. Ces modules comprennent notamment ici, comme illustré à la figure 1 :

- un premier module A2 qui s'occupe de formuler les requêtes en langage naturel arrivant au niveau du dispositif de communication DCOM2 et destinées à l'objet connecté 02 dans un langage compréhensible par l'objet connecté 02, à savoir ici dans un langage informatique noté M2 qu'utilise l'objet connecté 02. Le premier module A2 s'occupe également de formuler les réponses de l'objet connecté 02 réalisées dans le langage informatique M2, dans un langage naturel prédéterminé NAT2 ; et

- un deuxième module C2 qui s'occupe des aspects liés à la communication avec les autres objets connectés, et en particulier ici, avec l'objet connecté O1 et plus précisément son dispositif de communication DCOM1.

Les modules A2 et C2 sont eux-mêmes constitués d'un ou de plusieurs modules conformément à l'invention, définis par des instructions du programme PROG2.

Ainsi, le module C2 comprend, dans le mode de réalisation décrit ici, un module d'émission/réception 2A apte à recevoir d'un dispositif dit d'origine (par exemple du dispositif tiers 8 ou du dispositif de communication DCOM1 de l'objet connecté O1) une requête que l'objet connecté 02 est capable de traiter, cette requête étant formulée dans un langage naturel NAT2 prédéterminé. L'utilisation d'un langage naturel NAT2 identique au langage naturel NAT1 ou au contraire distinct du langage naturel NAT2 est décrit plus en détail ultérieurement. Le module d'émission/réception 2A est également en charge de transmettre le cas échéant, les réponses de l'objet connecté 02 aux requêtes qui lui ont été envoyées aux dispositifs à l'origine de ces requêtes. Les réponses sont transmises par le module d'émission/réception 2A formulées dans le langage naturel NAT2.

Le module A2 comprend quant à lui ici :

- un module de traduction 2B configuré pour traduire la requête reçue par le module C2 dans le langage informatique M2 utilisé pour communiquer par l'objet connecté 02 ; et
- un module d'émission/réception 2C, configuré pour transmettre la requête formulée dans le langage informatique M2 à une unité de traitement U2 de l'objet connecté 02. L'unité de traitement U2 comprend dans l'exemple envisagé précédemment d'un capteur de température 02, une unité de mesure de la température. C'est elle qui exécute la requête à proprement parler et fournit une réponse à cette requête, formulée dans le langage informatique M2, que le module d'émission/réception 2C transmet au module de traduction 2B pour être traduite dans le langage naturel NAT2.

On note que dans le mode de réalisation décrit ici, les objets O1 et O2 comprennent des modules de communication DCOM1 et DCOM2 fonctionnellement différents. Toutefois, on peut envisager que chacun des objets connectés soit associé à un module de communication plus complet réalisant les fonctions combinées des deux modules de communication DCOM1 et DCOM2. Ceci peut s'avérer avantageux d'une part, par souci d'harmonisation des dispositifs de communication associés aux différents objets connectés, et d'autre part, lorsque les objets connectés considérés sont susceptibles tantôt d'être à l'origine de requêtes, tantôt d'être sollicités pour traiter des requêtes.

Pour illustrer le mode de fonctionnement des dispositifs de communication DCOM1 et DCOM2 intégrés respectivement dans les objets connectés O1 et 02, et montrer combien ces dispositifs de communication facilitent la communication entre les objets connectés O1 et 02, nous allons envisager deux scénarii selon que les dispositifs de communication DCOM1 et DCOM utilisent le même langage naturel (NAT1=NAT2) ou des langages naturels distincts (NAT1≠NAT2). Le deuxième scénario s'appuie sur l'intervention du dispositif tiers 8 pour réaliser la traduction du langage naturel NAT1 utilisé par le dispositif de communication DCOM1 de l'objet connecté O1 dans le langage naturel NAT2 utilisé par le dispositif de communication DCOM2 de l'objet connecté 02.

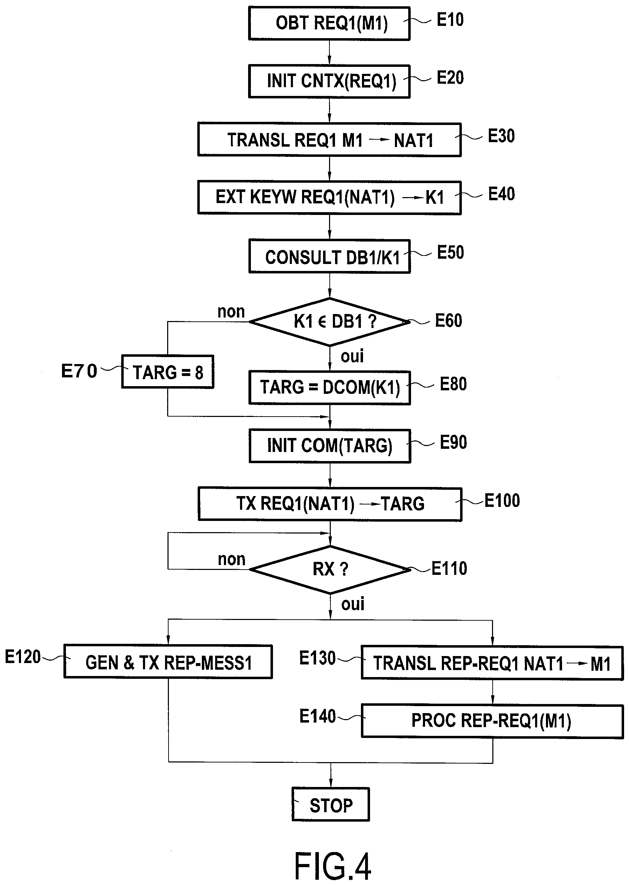

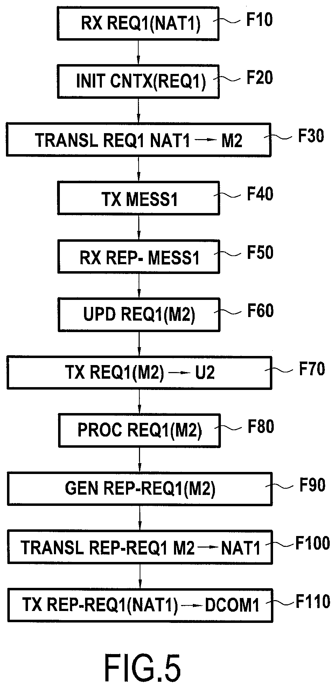

Les **figures 4 et 5** représentent les différentes étapes des procédés de communication selon l'invention mis en œuvre respectivement par les dispositifs de communication DCOM1 et DCOM2 dans le premier scénario dans lequel ces dispositifs de communication utilisent le même langage naturel.

En référence à la figure 4, dans ce premier scénario, on suppose que l'objet O1 par l'intermédiaire de son module de génération de requêtes G1, a généré une requête REQ1 visant à obtenir la température de la pièce en question, et formulée dans le langage informatique M1 utilisé par l'objet O1 selon l'exemple donné précédemment à savoir :

$$REQ1(M1)= \text{« retrieve\_celsius\_temp »}$$

Cette requête REQ1(M) est fournie par le module G1 au module d'émission/réception 1A du module A1 du dispositif de communication DCOM1 de l'objet O1 (étape E10).

La réception de la requête REQ1(M1) par le module A1 déclenche l'établissement et le maintien par le module de gestion 1C d'un contexte CNTX(REQ1) pour la requête REQ1 pour une durée déterminée, prise égale ici à la durée de traitement prédéfinie de la requête REQ1 (étape E20). Le contexte CNTX(REQ1) établi comprend un identifiant de contexte ID(REQ1) alloué à la requête REQ1.

Par ailleurs, la requête reçue par le module d'émission/réception 1A étant formulée dans le langage informatique M1, elle est traduite par le module de traduction 1B dans le langage naturel NAT1 (étape E30). A cet effet, le module de traduction 1B utilise par exemple une table de correspondance préétablie entre d'une part, les méthodes ou expressions du langage informatique M1 et d'autre part, l'équivalent formulé dans le langage naturel NAT1. Une telle table est typiquement l'inverse de celle qui est classiquement utilisée dans l'état de la technique par les assistants vocaux qui réalisent la traduction d'expressions ou de termes formulé(e)s dans un langage naturel vers un langage machine ou un langage informatique. L'établissement d'une telle table de correspondance ne pose aucun problème à l'homme du métier et n'est pas décrite davantage ici.

On note REQ1(NAT1), la requête REQ1 traduite formulée dans le langage naturel NAT1. Dans l'exemple envisagé ci-dessus, cette requête traduite en français (langage naturel NAT1) peut être, à titre illustratif, « quelle est la température ? ».

On note que la traduction de la requête REQ1 dans le langage naturel NAT1 ne reprend pas nécessairement toutes les informations présentes initialement dans la requête formulée en langage informatique. Ainsi dans l'exemple illustratif fourni ci-avant, le fait que la température soit donnée en degrés Celsius n'est pas indiqué dans la requête traduite en langage naturel. Cette information est toutefois stockée par le module de gestion 1C dans le contexte CNTX(REQ1) pour une utilisation ultérieure si besoin.

La requête REQ1(NAT1) traduite en langage naturel NAT1 est ensuite fournie au module C1 du dispositif de communication DCOM1.

Sur réception de cette requête, le module 1D d'extraction du module C1 extrait à partir de la requête REQ1(NAT1) un ou plusieurs mots clés K1 en langage naturel NAT1 représentatifs de la requête, autrement dit, des mots clés qui permettent de qualifier le traitement attendu ou requis par celle-ci (étape E40). Dans l'exemple envisagé ici, le module 1D d'extraction extrait le mot clé K1=« température ». Le module 1D d'extraction peut à cet effet utiliser une base de mots clés préétablie qu'il recherche dans la requête REQ1(NAT1). Cette base peut être générale, ou liée à un domaine métier, ou encore dépendre du type d'objet connecté auquel est associé le dispositif de communication considéré. Dans l'exemple envisagé ici, il peut s'agir ainsi d'une base générale regroupant des mots clés en relation avec la domotique, ou une base spécialisée sur la régulation de paramètres intervenant dans un contexte domestique, ou encore une base plus adaptée à l'objet O1 regroupant des mots clés en relation avec la gestion/mesure d'une température.

Le module d'identification 1E du dispositif de communication DCOM1 utilise ensuite le ou les mots clés K1 extraits par le module d'extraction 1D pour interroger la base de données DB1 en vue d'identifier un dispositif cible TARG vers lequel transférer la requête REQ1(NAT1) pour qu'elle puisse être traitée (étape E50).

Deux alternatives sont alors possibles.

Si le ou les mots clés K1 ne sont pas compris dans la base DB1 (réponse non à l'étape test E60), le module d'identification 1E est configuré pour identifier comme dispositif cible TARG le dispositif tiers 8 (étape E70).

Si le ou les mots clés K1 sont inclus dans la base DB1 et relié dans cette base à un dispositif de communication associé à un objet connecté (réponse oui à l'étape test E60), le module d'identification 1E identifie comme dispositif cible TARG le dispositif de communication relié au(x) mot(s) clé(s) K1 (étape E80). Dans l'exemple de la base de données DB1, le mot clé « température » est relié au dispositif de communication DCOM2 de l'objet connecté 02. L'objet connecté 02 est en effet apte à mesurer une température, tel que requis par la requête REQ1 de l'objet connecté O1. Autrement dit, selon cet exemple illustratif, le module d'identification 1E identifie lors de l'étape E80 comme dispositif cible TARG le dispositif de communication DCOM2 de l'objet connecté 02.

A partir de l'adresse de joignabilité du dispositif de communication DCOM2 fournie par la base de données DB1, le module d'émission/réception 1F du module C1 du dispositif de communication DCOM1 établit un canal de communication sur un réseau de communication avec le dispositif de communication DCOM2, et plus particulièrement avec son module C2 (étape E90). L'établissement d'un tel canal de communication sur un réseau à partir des moyens de communication 7 des objets connectés est connu en soi et dépend du réseau de communication considéré. Cette procédure n'est pas décrite en détail ici.

On suppose ici que le canal de communication établi est un canal de type messagerie instantanée aussi plus communément connue sous l'appellation « chat ». Toutefois cet exemple n'est donné qu'à titre illustratif et d'autres types de canaux peuvent être établis (ex. canal permettant l'échange de messages courts ou SMS (Short Message Service), de voix sur IP, etc.).

Le canal de communication ainsi établi est utilisé par le module d'émission/réception 1F du dispositif de communication DCOM1 de l'objet connecté O1 pour transmettre la requête REQ1(NAT1) en langage naturel NAT1 formulée par l'objet connecté O1 au dispositif de communication DCOM2 et plus particulièrement à son module C2 (étape E100). L'identifiant de contexte ID(REQ1) est inséré par le dispositif de communication DCOM1 dans la requête en langage naturel REQ1(NAT1) avant sa transmission vers le dispositif de communication DCOM2.

En référence à la figure 5, la requête REQ1(NAT1) en langage naturel NAT1 est reçue par le module d'émission/réception 2A du module C2 du dispositif de communication DCOM2 associé à l'objet connecté 02 (étape F10).

Un contexte CNTX(REQ1) est initié et maintenu pour la requête REQ1 par le dispositif de communication DCOM2, auquel il associe l'identifiant de contexte ID(REQ1) contenu dans la requête REQ1(NAT1) (étape F20).

La requête REQ1(NAT1) est ensuite traduite par le module de traduction 2B du module A2 du dispositif de communication DCOM2 dans le langage informatique M2 utilisé par l'objet connecté 02 (étape F30). A cet effet, le module de traduction 2B utilise une table de correspondance préétablie entre les méthodes du langage informatique M2 et des expressions et termes du langage naturel NAT2 identique ici au langage naturel NAT1 (table inverse de celle décrite précédemment pour le module de traduction 1B).

Dans l'exemple de requête REQ1 envisagé précédemment, la requête REQ1(M2) traduite dans le langage M2 est par exemple :

REQ1(M2)= « get_temperature () »

Dans l'exemple envisagé ici, on suppose que la requête REQ1(M2) traduite dans le langage M2 demande la fourniture d'un paramètre précisant si la température mesurée doit être fournie en degrés Celsius ou Farenheit. La valeur de ce paramètre n'étant pas contenue dans la requête REQ1(NAT1) reçue du dispositif de communication DCOM1, le dispositif de communication DCOM2, par l'intermédiaire de son module A2, a la possibilité d'interroger le dispositif de communication DCOM1 et plus précisément son module A1 pour obtenir cette valeur.

A cet effet, le module A2 utilise le contexte initié pour la requête REQ1 et envoie un message MESS1 au module A1 lui demander de préciser la valeur du paramètre et contenant l'identifiant de contexte ID(REQ1) (étape F40). Ce message est formulé en langage naturel. Par exemple il contient les termes suivants : MESS1 = « Dans quelle unité ? ». On note que pour formuler le message MESS1, le module A2 peut s'appuyer sur la table de correspondance inverse de celle utilisée pour traduire le langage naturel NAT2 (=NAT1 ici) dans le langage informatique M2, ou s'appuyer sur des tables alternatives établissant une correspondance entre les paramètres des méthodes du langage informatique M2 et des messages permettant de préciser ces requêtes formulés dans le langage naturel NAT2 (=NAT1 ici).

Le message MESS1 est transmis par le module d'émission/réception 2A du dispositif de communication DCOM2 au module d'émission/réception 1F du dispositif de communication DCOM1 via le canal de communication établi entre les deux modules de communication .

En référence à la figure 4, sur réception du message MESS1 (réponse oui à l'étape test E110), le module d'émission/réception 2A détecte qu'il s'agit non pas d'une réponse à la requête mais d'une demande de précision d'un paramètre de la requête émise dans le cadre du contexte maintenu pour la requête REQ1 (branche MESS sur la figure 4). Le message MESS1 contient en effet comme mentionné précédemment l'identifiant ID(REQ1) du contexte CNTX(REQ1) maintenu pour la requête REQ1.

La distinction entre une demande de précision d'un paramètre et une réponse à la requête peut être établie de différentes façons. Une indication prévue explicitement à cet effet dans le message MESS1 (via notamment un paramètre idoine inclus dans le message) peut par exemple permettre de distinguer les deux types de messages (demande de précision ou réponse définitive). En variante, le caractère de réponse définitive ou de demande de précision peut être indiqué en langage naturel : par exemple, pour une réponse, le message formulé en langage naturel peut être « Voici la réponse : xyz » ; au contraire pour une demande de précision, le message formulé en langage naturel peut être « J'ai une question : abcd ? ». Dans cette variante, pour établir la distinction entre les deux types de messages, le module d'émission/réception 2A peut rechercher dans le contenu du message MESS1 formulé en langage naturel des mots-clés prédéfinis comme par exemple « réponse » ou « question » ou la présence d'un point d'interrogation.

Le message MESS1 est transmis au module de gestion 1C du module A1 du dispositif de communication DCOM1 qui identifie, dans le contexte CNTX(REQ1) maintenu pour la requête REQ1, la valeur Celsius de l'unité requise qui avait été précédemment stockée lors de la traduction de la requête REQ1 en langage naturel. Le module A1 peut ainsi fournir, sans solliciter l'objet connecté O1 et notamment son module de génération G1 ou son unité de traitement U1, la valeur du paramètre demandé. Il génère un message de réponse REP_MESS1 contenant la valeur « Celsius » et formulé en langage naturel (par exemple tout simplement « Celsius »), et le transmet par le biais du module 1F d'émission/réception au dispositif de communication DCOM2 à destination de son module A2 (étape E120). Le message de réponse REP_MESS1 contient l'identifiant de contexte ID(REQ1) de la requête REQ1.

En référence à la figure 5, le message REP_MESS1 est reçu par le module d'émission/réception 2A du dispositif de communication DCOM2 et transmis au module A2 (étape F50). Celui-ci extrait la valeur du paramètre requis en langage naturel, et précise (après traduction de la valeur du paramètre) la requête REQ1(M2) formulée en langage informatique M2 (étape F60). Celle-ci devient :

REQ1(M2)= « get_temperature (Celsius) »

D'autres échanges entre les modules A1 et A2 peuvent être mis en œuvre si d'autres paramètres notamment de la requête doivent être précisés jusqu'à pouvoir qualifier pleinement la requête formulée par l'objet O1 pour qu'elle puisse être exécutée et/ou traitée par l'objet 02. Un enregistrement (log) de ces échanges peut être maintenu par chacun des modules pour garder une trace des interactions passées entre les modules A1 et A2.

Dans une variante de réalisation, le module A1 peut retenir en mémoire de cette interaction avec le module A2 que la requête REQ1 formulée dans le langage informatique M1 doit être traduite dans le langage naturel NAT1 en intégrant la valeur de l'unité de mesure de la température, et lors d'une prochaine requête similaire, préciser cette unité dans la traduction REQ1(NAT1) formulée dans le langage naturel NAT1.

Dans une autre variante de réalisation, d'autres informations que des paramètres visant à préciser la requête REQ1 peuvent être échangées par le biais de messages entre les modules A1 et A2 dans le contexte de la requête REQ1 : il peut s'agir par exemple d'informations représentatives de l'état des dispositifs de communication DCOM1 et DCOM2 et/ou des objets connectés O1 et O2, des indications sur le caractère plus ou moins urgent de la requête, ou encore des éléments permettant une authentification entre les modules A1 et A2, etc.

La requête REQ1(M2) formulée dans le langage informatique M2 est ensuite transmise par le module d'émission/réception 2C du module A2 à l'unité de traitement U2 de l'objet connecté O2 (étape F70).

La requête REQ1(M2) est alors traitée par l'unité de traitement U2 (étape F80). En l'espèce ici, l'objet connecté O2 mesure la température ambiante en degrés Celsius (on suppose qu'il se trouve dans la même pièce que l'objet connecté O1).

Puis il transmet au module d'émission/réception 2C du module A2 la température mesurée en degrés Celsius dans un message de réponse à la requête REQ1 formulée dans le langage informatique M2 (étape F90). On désigne par REP_REQ1(M2) ce message de réponse.

Le message de réponse REP_REQ1(M2) étant formulé dans le langage informatique M2, elle est traduite par le module de traduction 2B dans le langage naturel NAT2, autrement dit dans le scénario considéré ici dans le langage naturel NAT1 (étape F100). A cet effet, le module de traduction 1B utilise la table de correspondance inverse à celle utilisée durant l'étape de traduction F30 de la requête REQ1.

On note REP_REQ1(NAT1), le message de réponse REP_REQ1 traduit et formulé dans le langage naturel NAT1. Dans l'exemple envisagé ci-dessus, ce message de réponse traduit en français (langage naturel NAT1) peut être, à titre illustratif, « la température est de 20° Celsius ».

La réponse REP_REQ1(NAT1) traduite en langage naturel NAT1 est ensuite fournie au module C2 du dispositif de communication DCOM2 et plus particulièrement à son module d'émission/réception 2A. Celui-ci transmet la réponse REP_REQ1(NAT1) au dispositif de communication DCOM1 et plus particulièrement à son module C1 en utilisant le canal de communication précédemment établi (étape F110).

En référence à la figure 4, sur réception de cette réponse (réponse oui à l'étape E110), le module 1F d'émission/réception identifie qu'il s'agit de la réponse à la requête REQ1 (branche REP sur la figure 4) et la transmet au module de traduction 1B du module A1 du dispositif de communication DCOM1. Le module de traduction 1B traduit la réponse REP_REQ1(NAT1) dans le langage informatique M1 utilisé par l'objet connecté O1 et notamment par son unité de traitement U1 (étape E130). Il utilise à cet effet la table de correspondance inverse à celle utilisée lors de l'étape de traduction E30.

Puis le module d'émission/réception 1A fournit la réponse traduite REP_REQ1(M1) et formulée dans le langage informatique M1 à l'unité de traitement U1 de l'objet connecté O1 pour traitement de cette réponse (étape E140). Dans l'exemple envisagé ici, l'unité de traitement U1 utilise la réponse fournie par le capteur de température O2 pour réguler la température de la pièce à la hausse ou à la baisse, en agissant par exemple sur le chauffage de la pièce.

Dans le premier scénario qui vient d'être décrit, les dispositifs de communication associés aux objets connectés O1 et O2 utilisent le même langage naturel, i.e. NAT1=NAT2, et le module d'identification 1E est en mesure d'identifier un dispositif de communication DCOM2 d'un objet connecté capable de traiter la requête de l'objet O1.

Il peut s'avérer toutefois que lors de l'étape d'identification E60, le module d'identification 1E ne parvienne pas à identifier dans la base de données DB1 un dispositif de communication d'un objet connecté apte à traiter la requête REQ1, typiquement parce qu'aucun des mots clés K1 extraits de la requête REQ1 n'est présent dans la base de données DB1. Plusieurs raisons sont possibles à cela : par exemple, la base de données DB1 n'est pas suffisamment complète et ne contient pas d'objet connecté en mesure de traiter la requête formulée par l'objet connecté O1, ou il n'existe pas d'objet connecté utilisant le même langage naturel NAT1 que le dispositif de communication DCOM1, etc.

Dans un tel scénario, le module d'identification 1E est configuré pour transmettre la requête REQ1(NAT1) traduite en langage naturel NAT1 vers un dispositif tiers 8 (cf. étape E70 évoquée rapidement précédemment). L'établissement de la communication par le module d'émission/réception 1F du dispositif de communication DCOM1 avec ce dispositif tiers 8 peut se faire de la même façon que décrite précédemment avec le dispositif de communication DCOM2.

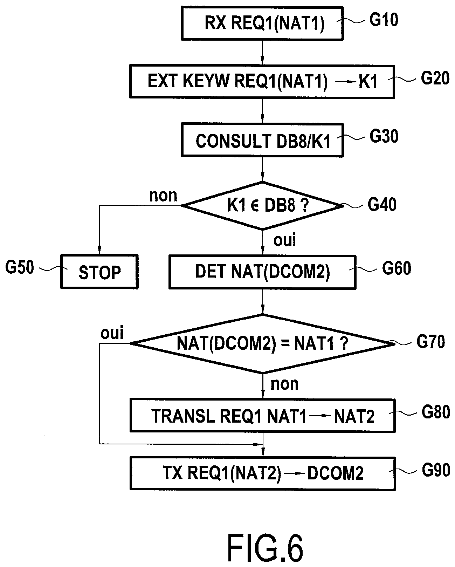

La **figure 6** illustre les principales étapes mises en œuvre par le dispositif tiers 8 sur réception de cette requête REQ1(NAT1) (étape G10).

On suppose ici, comme évoqué ci-avant, que le dispositif tiers 8 dispose d'une base de données DB8 plus complète que la base de données DB1 du dispositif de communication DCOM1. Cette base regroupe le même type d'informations que la base de données DB1 à ceci près qu'elle peut inclure des dispositifs de communication communiquant selon un langage naturel différent du langage naturel NAT1. Elle peut en outre comprendre des dispositifs de communication associés à davantage d'objets connectés que la base de données DB1, par exemple parce qu'il s'agit d'une base de données établie par domaine métier et non renseignée uniquement par l'utilisateur de l'objet connecté O1 en fonction de sa connaissance locale du système 1.

A titre d'exemple, on fait l'hypothèse ici que la base de données DB8 contient notamment, relié au mot clé « température » formulé dans le langage naturel NAT1, le dispositif de communication DCOM2 associé à un objet connecté 02, mais que celui-ci utilise maintenant un langage naturel NAT2 distinct du langage naturel NAT1. Par exemple NAT2 est l'anglais et NAT1 est le français. Le langage naturel NAT2 utilisé par le dispositif de communication DCOM2 est associé dans la base de données DB8 à l'entrée correspondant au mot clé en langage naturel NAT1 « température ».

Sur réception de la requête REQ1(NAT1) formulée en langage naturel NAT1, le dispositif tiers 8, via son module d'identification 8A, détermine le langage naturel NAT1 utilisé par la requête, et extrait des mots clés K1 représentatifs de cette requête. Il procède à cet effet de façon similaire à ce qui a été décrit précédemment pour le module d'identification 1E du dispositif de communication DCOM1 (étape G20).

Puis le module d'identification 8A du dispositif tiers 8 interroge en utilisant le ou les mots clés K1 en langage naturel NAT1 la base de données DB8 (étape G30). La base de données DB8 peut avoir pour faciliter cette interrogation, des mots clés classés par langage naturel.

Si le ou les mots clés K1 ne sont pas présents dans la base de données DB8 (réponse non à l'étape test G40), alors le dispositif tiers 8 répond négativement à la requête REQ1 et transmet cette réponse négative au dispositif de communication DCOM1 (étape G50). Le système 1 n'est pas en mesure d'identifier un objet connecté permettant de répondre à la requête de l'objet connecté O1 et celui-ci est invité à formuler une autre requête.

En variante, le dispositif tiers 8 peut être configuré pour interroger une autre base de données, plus complète encore que la base de données DB8.

Si le ou les mots clés K1 sont présents dans la base DB8 et reliés dans cette base à un dispositif de communication associé à un objet connecté (réponse oui à l'étape test G40), le module d'identification 8A détermine à partir des informations stockées dans la base DB8 le langage naturel utilisé par ce dispositif de communication (étape G60). Dans l'exemple de la base de données DB8 décrit précédemment, le mot clé K1=« température » en langage naturel NAT1 (français) est relié au dispositif de communication DCOM2 de l'objet connecté 02 qui utilise le langage naturel NAT2 (anglais).

Le module d'identification 8A compare les deux langages naturels NAT1 et NAT2 (étape test G70).

Le langage naturel NAT2 étant différent du langage naturel NAT1 (réponse non à l'étape test G70), le dispositif tiers 8, par l'intermédiaire de son module de traduction 8A, traduit alors la requête REQ1(NAT1) formulée dans le langage naturel NAT1 dans le langage naturel NAT2 (étape G80). Il utilise à cet effet une base de dictionnaire classique du langage naturel NAT1 vers le langage naturel NAT2.

Si les deux langages sont identiques, aucune traduction n'est mise en œuvre.

Puis un canal de communication est établi entre le dispositif tiers 8 et le dispositif de communication DCOM2 de l'objet connecté 02, et la requête REQ1(NAT2) formulée dans le langage naturel NAT2 utilisée par le dispositif de communication DCOM2 est envoyée via ce canal de communication au dispositif de communication DCOM2 (étape G90).

Le dispositif de communication DCOM2 sur réception de cette requête REQ1(NAT2) formulée dans le langage naturel NAT2 procède de façon similaire à ce qui a été décrit précédemment dans le premier scénario en référence à la figure 5, en utilisant le langage naturel NAT2 distinct du langage naturel NAT1. Il convient de noter que dans ce deuxième scénario, le dispositif tiers 8 est en coupure de flux de tous les échanges en langage naturel mis en œuvre entre les deux dispositifs de communication DCOM1 et DCOM2 pour réaliser la traduction de ces échanges du langage naturel NAT1 vers le langage naturel NAT2 et inversement.

Il convient de noter que dans les deux scenarii envisagés, les deux objets connectés communiquent en utilisant un langage informatique qui leur est propre. On peut toutefois envisager d'appliquer l'invention dans un contexte où l'une ou l'autre des entités émettrice et réceptrice utilise un langage naturel et non un langage informatique, auquel cas l'étape préalable de traduction de la requête ou de la réponse d'un langage informatique vers un langage naturel n'est pas nécessaire.

**Revendications**

1. Dispositif de communication (DCOM1) associé à une entité dite émettrice (O1) comprenant :

   — un premier module d'émission/réception (1A) apte à recevoir, en provenance de l'entité émettrice, une requête formulée dans un langage naturel prédéterminé,
   — un module d'extraction (1D) configuré pour extraire à partir de la requête formulée dans le langage naturel prédéterminé au moins un mot clé représentatif de la requête ;
   — un module d'identification (1E) configuré pour identifier en utilisant ledit au moins un mot clé extrait, un dispositif cible supportant le langage naturel prédéterminé vers lequel transmettre la requête ; et
   — un deuxième module d'émission/réception (1F) configuré pour transmettre la requête formulée dans le langage naturel au dispositif cible.

2. Dispositif de communication (DCOM1) selon la revendication 1, dans lequel le premier module d'émission/réception (1A) est apte en outre à recevoir, en provenance de l'entité émettrice, une requête formulée dans un langage informatique prédéterminé, le dispositif de communication (DCOM1) comprenant en outre un module de traduction (1B) configuré pour traduire la requête formulée dans le langage informatique prédéterminé, dans le langage naturel prédéterminé.

3. Dispositif de communication (DCOM1) selon la revendication 2 dans lequel :

— le premier module d'émission/réception (1A) est activé sur réception d'une réponse formulée dans le langage naturel à la requête, pour transmettre cette réponse à l'entité émettrice ; et
— le module de traduction (1B) est en outre configuré pour traduire la réponse préalablement à sa transmission à l'entité émettrice dans le langage informatique prédéterminé si l'entité émettrice communique en utilisant le langage informatique prédéterminé.

4. Dispositif de communication (DCOM1) selon l'une des revendications 1 à 3 dans lequel le module d'identification (1E) est configuré pour interroger, en utilisant ledit au moins un mot clé extrait, une base de données (DB1) comprenant au moins un mot clé appartenant au langage naturel prédéterminé relié à au moins un dispositif de communication supportant le langage naturel prédéterminé et associé à un objet communiquant capable de traiter la requête dont ledit au moins un mot clé est représentatif.

5. Dispositif de communication (DCOM1) selon la revendication 4 dans lequel le module d'identification est configuré pour identifier comme dispositif cible :

— un dispositif de communication (DCOM2) associé à un objet communicant capable de traiter la requête et relié dans la base de données audit au moins un mot clé extrait ; ou
— un dispositif prédéfini (8) si la base de données ne contient pas ledit au moins un mot clé extrait.

6. Dispositif de communication (DCOM1) selon la revendication 5 dans lequel le dispositif prédéfini est un dispositif apte à identifier un objet communicant capable de traiter la requête dont ledit au moins un mot clé extrait est représentatif.

7. Dispositif de communication (DCOM1) selon l'une quelconque des revendications 4 à 6 dans lequel le module d'identification est en outre configuré pour :

— obtenir des capacités d'au moins un objet communicant ; et
— ajouter dans la base de données un dispositif de communication supportant le langage naturel prédéterminé et associé à l'objet communicant en le reliant à au moins un mot clé déterminé à partir des capacités obtenues de l'objet communicant.

8. Dispositif de communication (DCOM1) selon l'une quelconque des revendications 1 à 7 dans lequel dans la base de données, au moins un mot clé représentatif d'une requête est en outre relié à un paramètre permettant de préciser ladite requête.

9. Dispositif de communication (DCOM1) selon l'une quelconque des revendications 1 à 8 dans lequel le deuxième module d'émission/réception est configuré pour établir avec le dispositif cible un canal de communication de type messagerie instantanée pour communiquer avec ce dispositif cible en utilisant le langage naturel prédéterminé.

10. Dispositif de communication (DCOM1) selon l'une quelconque des revendications 1 à 9 comprenant en outre un module de gestion (1C) configuré pour maintenir un contexte pour la requête sur une période déterminée, le contexte maintenu par le module de gestion comprenant un identifiant de contexte associé à la requête.

11. Dispositif de communication (DCOM1) selon la revendication 9 configuré pour fournir, sans solliciter l'entité émettrice, au moins un paramètre au dispositif cible précisant la requête dans un message comprenant l'identifiant de contexte associé à la requête.

12. Entité émettrice (O1) comprenant un premier dispositif de communications (DCOM1) selon l'une quelconque des revendications 1 à 11.

13. Système (1) comprenant :

— un premier dispositif de communication (DCOM1) selon l'une quelconque des revendications 1 à 11 associé à une entité émettrice (O1) à l'origine d'une requête ;
— un deuxième dispositif de communication (DCOM2) associé à une entité réceptrice (O2) capable de traiter la requête ;

ledit premier dispositif de communication étant apte à transmettre au deuxième dispositif de communication ladite requête formulée dans un langage naturel prédéterminé supporté par le deuxième dispositif de communication.

14. Système conforme à la revendication 13, dans lequel l'entité réceptrice (O2) comprend :

— un premier module d'émission/réception (2A) apte à recevoir d'un dispositif dit d'origine une requête que l'objet communicant est capable de traiter, ladite requête étant formulée dans un langage naturel prédéterminé ;

— un module de traduction (2B) configuré pour traduire la requête reçue dans un langage informatique prédéterminé utilisé pour communiquer par l'objet communicant ; et

— un deuxième module d'émission/réception (2C), configuré pour transmettre la requête formulée dans le langage informatique prédéterminé à l'objet communicant.

15. Système (1) comprenant :

— un premier dispositif de communication (DCOM1) selon l'une quelconque des revendications 1 à 11 associé à une entité émettrice à l'origine d'une requête ;

— un deuxième dispositif de communication (DCOM2) associé à une entité réceptrice capable de traiter ladite requête ; et

— un dispositif intermédiaire (8) entre le premier dispositif de communication et le deuxième dispositif de communication auquel le premier dispositif de communication transmet la requête formulée dans un langage naturel prédéterminé, ledit dispositif intermédiaire étant configuré pour, sur réception de la requête :

• identifier le deuxième dispositif de communication associé à l'entité réceptrice capable de traiter la requête ; et

• transmettre la requête au deuxième dispositif de communication.

16. Système (1) selon la revendication 15 dans lequel le premier et le deuxième dispositifs de communication supportent des langages naturels différents, et le dispositif intermédiaire comprend un module de traduction du langage naturel supporté par le premier dispositif de communication vers le langage naturel supporté par le deuxième dispositif de communication et inversement, configuré pour traduire la requête avant sa transmission au deuxième dispositif de communication.

17. Procédé de communication destiné à être mis en oeuvre par un dispositif de communication (DCOM1) associé à une entité dite émettrice (O1), ledit procédé comprenant :

— une étape de réception (E10) d'une requête formulée dans un langage prédéterminé émise par l'entité émettrice

— une étape d'extraction (E40) à partir de la requête d'au moins un mot clé représentatif de la requête ;

— une étape d'identification (E50-E80), en utilisant ledit au moins un mot clé extrait, d'un dispositif dit cible supportant un langage naturel prédéterminé vers lequel transmettre la requête ; et

— une étape de transmission (E100) de la requête au dispositif cible identifié.

18. Procédé de communication selon la revendication 17, dans lequel ladite requête émise par l'entité émettrice est formulée dans un langage informatique prédéterminé, ledit procédé comportant en outre une étape de traduction (E30) de la requête formulée dans le langage informatique prédéterminé, dans le langage naturel prédéterminé.

**Patentansprüche**

1. Kommunikationsvorrichtung (DCOM1), die einer so genannten Sende-Entität (O1) zugeordnet ist, die enthält

- ein erstes Sende-/Empfangsmodul (1A), das von der Sende-Entität eine in einer vorbestimmten natürlichen Sprache formulierte Anfrage empfangen kann,

- ein Entnahmemodul (1D), das konfiguriert ist, ausgehend von der in der vorbestimmten natürlichen Sprache formulierten Anfrage mindestens ein repräsentatives Schlüsselwort aus der Anfrage zu entnehmen;

- ein Identifizierungsmodul (1E), das konfiguriert ist, unter Verwendung des mindestens einen entnommenen Schlüsselworts eine die vorbestimmte natürliche Sprache unterstützende Zielvorrichtung zu identifizieren, zu der die Anfrage übertragen werden soll; und

- ein zweites Sende-/Empfangsmodul (1F), das konfiguriert ist, die in der natürlichen Sprache formulierte Anfrage an die Zielvorrichtung zu übertragen.

2. Kommunikationsvorrichtung (DCOM1) nach Anspruch 1, wobei das erste Sende-/Empfangsmodul (1A) außerdem von der Sende-Entität eine in einer vorbestimmten Programmiersprache formulierte Anfrage empfangen kann, wobei die Kommunikationsvorrichtung (DCOM1) außerdem ein Übersetzungsmodul (1B) enthält, das konfiguriert ist, die in der vorbestimmten Programmiersprache formulierte Anfrage in die vorbestimmte natürliche Sprache zu übersetzen.

3. Kommunikationsvorrichtung (DCOM1) nach Anspruch 2, wobei:

- das erste Sende-/Empfangsmodul (1A) bei Empfang einer in der natürlichen Sprache formulierten Antwort auf die Anfrage aktiviert wird, um diese Antwort an die Sende-Entität zu übertragen; und
- das Übersetzungsmodul (1B) außerdem konfiguriert ist, die Antwort vor ihrer Übertragung an die Sende-Entität in die vorbestimmte Programmiersprache zu übersetzen, wenn die Sende-Entität unter Verwendung der vorbestimmten Programmiersprache kommuniziert.

4. Kommunikationsvorrichtung (DCOM1) nach einem der Ansprüche 1 bis 3, wobei das Identifizierungsmodul (1E) konfiguriert ist, unter Verwendung des mindestens einen entnommenen Schlüsselworts eine Datenbank (DB1) abzufragen, die mindestens ein zur vorbestimmten natürlichen Sprache gehörendes Schlüsselwort enthält, das mit mindestens einer die vorbestimmte natürliche Sprache unterstützenden Kommunikationsvorrichtung verbunden und einem kommunizierenden Objekt zugeordnet ist, das fähig ist, die Anfrage zu verarbeiten, für die das mindestens eine Schlüsselwort repräsentativ ist.

5. Kommunikationsvorrichtung (DCOM1) nach Anspruch 4, wobei das Identifizierungsmodul konfiguriert ist, als Zielvorrichtung zu identifizieren:

- eine Kommunikationsvorrichtung (DCOM2), die einem kommunizierenden Objekt zugeordnet ist, das fähig ist, die Anfrage zu verarbeiten, und in der Datenbank mit dem mindestens einen entnommenen Schlüsselwort verbunden ist; oder
- eine vordefinierte Vorrichtung (8), wenn die Datenbank nicht das mindestens eine entnommene Schlüsselwort enthält.

6. Kommunikationsvorrichtung (DCOM1) nach Anspruch 5, wobei die vordefinierte Vorrichtung eine Vorrichtung ist, die ein kommunizierendes Objekt identifizieren kann, das fähig ist, die Anfrage zu verarbeiten, für die das mindestens eine entnommene Schlüsselwort repräsentativ ist.

7. Kommunikationsvorrichtung (DCOM1) nach einem der Ansprüche 4 bis 6, wobei das Identifizierungsmodul außerdem konfiguriert ist:

- Kapazitäten mindestens eines kommunizierenden Objekts zu erhalten; und
- in die Datenbank eine Kommunikationsvorrichtung hinzuzufügen, die die vorbestimmte natürliche Sprache unterstützt und dem kommunizierenden Objekt zugeordnet ist, indem sie mit mindestens einem Schlüsselwort verbunden wird, das ausgehend von den erhaltenen Kapazitäten des kommunizierenden Objekts bestimmt wird.

8. Kommunikationsvorrichtung (DCOM1) nach einem der Ansprüche 1 bis 7, wobei in der Datenbank mindestens ein für eine Anfrage repräsentatives Schlüsselwort außerdem mit einem Parameter verbunden ist, der es ermöglicht, die Anfrage zu präzisieren.

9. Kommunikationsvorrichtung (DCOM1) nach einem der Ansprüche 1 bis 8, wobei das zweite Sende-/Empfangsmodul konfiguriert ist, mit der Zielvorrichtung einen Kommunikationskanal der Art Instant Messaging aufzubauen, um mit dieser Zielvorrichtung unter Verwendung der vorbestimmten natürlichen Sprache zu kommunizieren.

10. Kommunikationsvorrichtung (DCOM1) nach einem der Ansprüche 1 bis 9, die außerdem ein Verwaltungsmodul (1C) enthält, das konfiguriert ist, einen Kontext für die Anfrage über einen vorbestimmten Zeitraum aufrechtzuerhalten, wobei der vom Verwaltungsmodul aufrechterhaltene Kontext eine der Anfrage zugeordnete Kontextkennung enthält.

11. Kommunikationsvorrichtung (DCOM1) nach Anspruch 9, die konfiguriert ist, ohne Beanspruchung der Sende-Entität mindestens einen Parameter an die Zielvorrichtung zu liefern, der die Anfrage in einer Nachricht präzisiert, die die der Anfrage zugeordnete Kontextkennung enthält.

12. Sende-Entität (O1), die eine erste Kommunikationsvorrichtung (DCOM1) nach einem der Ansprüche 1 bis 11 enthält.

13. System (1), das enthält:

- eine erste Kommunikationsvorrichtung (DCOM1) nach einem der Ansprüche 1 bis 11 zugeordnet zu einer Sende-Entität (O1), die Ursprung einer Anfrage ist;
- eine zweite Kommunikationsvorrichtung (DCOM2) zugeordnet zu einer Empfangs-Entität (02), die die Anfrage verarbeiten kann;

wobei die erste Kommunikationsvorrichtung fähig ist, die in einer von der zweiten Kommunikationsvorrichtung unterstützten vorbestimmten natürlichen Sprache formulierte Anfrage an die zweite Kommunikationsvorrichtung zu übertragen.

14. System nach Anspruch 13, wobei die Empfangs-Entität (02) enthält:

- ein erstes Sende-/Empfangsmodul (2A), das fähig ist, von einer so genannten Ursprungsvorrichtung eine Anfrage zu empfangen, die das kommunizierende Objekt verarbeiten kann, wobei die Anfrage in einer vorbestimmten natürlichen Sprache formuliert ist;
- ein Übersetzungsmodul (2B), das konfiguriert ist, die empfangene Anfrage in eine vorbestimmte Programmiersprache zu übersetzen, die verwendet wird, um über das kommunizierende Objekt zu kommunizieren; und
- ein zweites Sende-/Empfangsmodul (2C), das konfiguriert ist, die in der vorbestimmten Programmiersprache formulierte Anfrage an das kommunizierende Objekt zu übertragen.

15. System (1), das enthält:

- eine erste Kommunikationsvorrichtung (DCOM1) nach einem der Ansprüche 1 bis 11, die einer Sende-Entität zugeordnet ist, die der Ursprung einer Anfrage ist;
- eine zweite Kommunikationsvorrichtung (DCOM2), die einer Empfangs-Entität zugeordnet ist, die fähig ist, die Anfrage zu verarbeiten; und
- eine Zwischenvorrichtung (8) zwischen der ersten Kommunikationsvorrichtung und der zweiten Kommunikationsvorrichtung, an die die erste Kommunikationsvorrichtung die in einer vorbestimmten natürlichen Sprache formulierte Anfrage überträgt, wobei die Zwischenvorrichtung konfiguriert ist, um bei Empfang der Anfrage:

• die der Empfangs-Entität, die fähig ist, die Anfrage zu verarbeiten, zugeordnete zweite Kommunikationsvorrichtung zu identifizieren; und
• die Anfrage an die zweite Kommunikationsvorrichtung zu übertragen.

16. System (1) nach Anspruch 15, wobei die erste und die zweite Kommunikationsvorrichtungen unterschiedliche natürliche Sprachen unterstützen, und die Zwischenvorrichtung ein Übersetzungsmodul der von der ersten Kommunikationsvorrichtung unterstützten natürlichen Sprache in die von der zweiten Kommunikationsvorrichtung unterstützte natürliche Sprache und umgekehrt enthält, das konfiguriert ist, die Anfrage vor ihrer Übertragung an die zweite Kommunikationsvorrichtung zu übersetzen.

17. Kommunikationsverfahren, das dazu bestimmt ist, von einer Kommunikationsvorrichtung (DCOM1) durchgeführt zu werden, die einer so genannten Sende-Entität (O1) zugeordnet ist, wobei das Verfahren enthält:

- einen Empfangsschritt (E10) einer in einer vorbestimmten natürlichen Sprache formulierten Anfrage, die von der Sende-Entität gesendet wird;
- einen Schritt der Entnahme (E40) ausgehend von der Anfrage mindestens eines für die Anfrage repräsentativen Schlüsselworts;
- einen Schritt der Identifizierung (E50-E80) unter Verwendung des mindestens einen entnommenen Schlüsselworts einer eine vorbestimmte natürliche Sprache unterstützenden so genannten Zielvorrichtung, an die die Anfrage übertragen werden soll; und
- einen Schritt der Übertragung (E100) der Anfrage an die identifizierte Zielvorrichtung.

18. Kommunikationsverfahren nach Anspruch 17, wobei die von der Sende-Entität gesendete Anfrage in einer vorbestimmten Programmiersprache formuliert wird, wobei das Verfahren außerdem einen Übersetzungsschritt (E30) der in der vorbestimmten Programmiersprache formulierten Anfrage in die vorbestimmte natürliche Sprache enthält.

## Claims

1. Communication device (DCOM1) associated with a so-called transmitting entity (O1) comprising:

- a first transceiver module (1A) capable of receiving, from the transmitting entity, a request formulated in a predetermined natural language,
- an extraction module (1D) configured to extract, from the request formulated in the predetermined natural language, at least one keyword representative of the request;
- an identification module (1E) configured to identify, by using said at least one extracted keyword, a target device supporting the predetermined natural language to which to transmit the request; and
- a second transceiver module (1F) configured to transmit the request formulated in the natural language to the target device.

2. Communication device (DCOM1) according to Claim 1, wherein the first transceiver module (1A) is also capable of receiving, from the transmitting entity, a request formulated in a predetermined computer language, the communication device (DCOM1) also comprising a translation module (1B) configured to translate the request formulated in the predetermined computer language into the predetermined natural language.

3. Communication device (DCOM1) according to Claim 2, wherein:

- the first transceiver module (1A) is activated on reception of a response formulated in the natural language to the request, to transmit this response to the transmitting entity; and

- the translation module (1B) is also configured to translate the response prior to its transmission to the transmitting entity into the predetermined computer language if the transmitting entity communicates by using the predetermined computer language.

4. Communication device (DCOM1) according to one of Claims 1 to 3, wherein the identification module (1E) is configured to interrogate, by using said at least one extracted keyword, a database (DB1) comprising at least one keyword belonging to the predetermined natural language linked to at least one communication device supporting the predetermined natural language and associated with a communicating object capable of processing the request of which said at least one keyword is representative.

5. Communication device (DCOM1) according to Claim 4, wherein the identification module is configured to identify as target device:

    - a communication device (DCOM2) associated with a communicating object capable of processing the request and linked in the database to said at least one extracted keyword; or
    - a predefined device (8) if the database does not contain said at least one extracted keyword.

6. Communication device (DCOM1) according to Claim 5, wherein the predefined device is a device capable of identifying a communicating object capable of processing the request of which said at least one extracted keyword is representative.

7. Communication device (DCOM1) according to any one of Claims 4 to 6, wherein the identification module is also configured to:

    - obtain capabilities of at least one communicating object; and
    - add to the database a communication device supporting the predetermined natural language and associated with the communicating object by linking it to at least one keyword determined on the basis of the capabilities obtained from the communicating object.

8. Communication device (DCOM1) according to any one of Claims 1 to 7, wherein, in the database, at least one keyword representative of a request is also linked to a parameter that allows said request to be specified.

9. Communication device (DCOM1) according to any one of Claims 1 to 8, wherein the second transceiver module is configured to establish, with the target device, a communication channel of instant messaging type to communicate with this target device by using the predetermined natural language.

10. Communication device (DCOM1) according to any one of Claims 1 to 9, further comprising a management module (1C) configured to maintain a context for the request over a determined period, the context maintained by the management module comprising a context identifier associated with the request.

11. Communication device (DCOM1) according to Claim 9, configured to supply, without invoking the transmitting entity, at least one parameter to the target device specifying the request in a message comprising the context identifier associated with the request.

12. Transmitting entity (O1) comprising a first communication device (DCOM1) according to any one of Claims 1 to 11.

13. System (1) comprising:

    - a first communication device (DCOM1) according to any one of Claims 1 to 11 associated with a transmitting entity (O1) originating a request;
    - a second communication device (DCOM2) associated with a receiving entity (02) capable of processing the request;

    said first communication device being capable of transmitting, to the second communication device, said request formulated in a predetermined natural language supported by the second communication device.

14. System according to Claim 13, wherein the receiving entity (02) comprises:

    - a first transceiver module (2A) capable of receiving, from a so-called origin device, a request that the communicating object is capable of processing, said request being formulated in a predetermined natural language;
    - a translation module (2B) configured to translate the request received into a predetermined computer language used to communicate by the communicating object; and
    - a second transceiver module (2C), configured to transmit the request formulated in the predetermined computer language to the communicating object.

15. System (1) comprising:

    - a first communication device (DCOM1) according to any one of Claims 1 to 11 associated with a transmitting entity originating a request;

- a second communication device (DCOM2) associated with a receiving entity capable of processing said request; and

- an intermediate device (8) between the first communication device and the second communication device to which the first communication device transmits the request formulated in a predetermined natural language, said intermediate device being configured to, on reception of the request:

> • identify the second communication device associated with the receiving entity capable of processing the request; and
> • transmit the request to the second communication device.

16. System (1) according to Claim 15, wherein the first and second communication devices support different natural languages, and the intermediate device comprises a translation module for translating from the natural language supported by the first communication device to the natural language supported by the second communication device, and vice versa, configured to translate the request before its transmission to the second communication device.

17. Communication method intended to be implemented by a communication device (DCOM1) associated with a so-called transmitting entity (O1), said method comprising:

> - a step of reception (E10) of a request formulated in a predetermined language transmitted by the transmitting entity
> - a step of extraction (E40) from the request of at least one keyword representative of the request;
> - a step of identification (E50-E80), by using said at least one extracted keyword, of a so-called target device supporting a predetermined natural language to which to transmit the request; and
> - a step of transmission (E100) of the request to the identified target device.

18. Communication method according to Claim 17, wherein said request transmitted by the transmitting entity is formulated in a predetermined computer language, said method also comprising a step of translation (E30) of the request formulated in the predetermined computer language, into the predetermined natural language.

FIG.1

FIG.2

| KEYW | DEV/OBJ | PARAM |
|---|---|---|
| "Température" | DCOM2(O2) | Celsius/Farenheit |
| .... | .... | .... |
| .... | .... | .... |

E1 →
E2 →
E3 →

DB1

FIG.3

FIG.4

RX REQ1(NAT1) — F10

INIT CNTX(REQ1) — F20

TRANSL REQ1 NAT1 → M2 — F30

TX MESS1 — F40

RX REP- MESS1 — F50

UPD REQ1(M2) — F60

TX REQ1(M2) → U2 — F70

PROC REQ1(M2) — F80

GEN REP-REQ1(M2) — F90

TRANSL REP-REQ1 M2 → NAT1 — F100

TX REP-REQ1(NAT1) → DCOM1 — F110

FIG.5

RX REQ1(NAT1) — G10

EXT KEYW REQ1(NAT1) →K1 — G20

CONSULT DB8/K1 — G30

non ← K1 ∈ DB8 ? — G40

oui

G50 — STOP

DET NAT(DCOM2) — G60

oui ← NAT(DCOM2) = NAT1 ? — G70

non

TRANSL REQ1 NAT1→NAT2 — G80

TX REQ1(NAT2)→DCOM2 — G90

FIG.6

**EP 3 643 043 B1**

## RÉFÉRENCES CITÉES DANS LA DESCRIPTION

### Documents brevets cités dans la description

- US 20160255186 A1